(19) Europäisches Patentamt
European Patent Office
Office européen des brevets

(11) **EP 1 887 737 A1**

(12) **EUROPEAN PATENT APPLICATION**

(43) Date of publication:
**13.02.2008 Bulletin 2008/07**

(51) Int Cl.:
***H04L 12/56*** (2006.01)  ***H04L 1/16*** (2006.01)

(21) Application number: **06016749.1**

(22) Date of filing: **10.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
- **Mitsubishi Electric Information Technology Centre**
  **Europe B.V.**
  **1119 NS  Schiphol Rijk (NL)**
  Designated Contracting States:
  **FR**
- **MITSUBISHI DENKI KABUSHIKI KAISHA**
  **Chiyoda-ku, Tokyo 100-8310 (JP)**
  Designated Contracting States:
  **AT BE BG CH CY CZ DE DK EE ES FI GB GR HU IE IS IT LI LT LU LV MC NL PL PT RO SE SI SK TR**

(72) Inventors:
- **Hara, Yoshitaka,**
  **c/o Mitsubishi Electricité**
  **35708 Rennes Cedex 7 (FR)**
- **Fukui, Noriyuki,**
  **c/o Mitsubishi Electricité**
  **35708 Rennes Cedex 7 (FR)**
- **Yano, Yasuhiro,**
  **c/o Mitsubishi Electricité**
  **35708 Rennes Cedex 7 (FR)**
- **Nagai, Yukimasa,**
  **c/o Mitsubishi Electricité**
  **35708 Rennes Cedex 7 (FR)**

(74) Representative: **Maillet, Alain**
  **Cabinet Le Guen & Maillet**
  **5, place Newquay**
  **B.P. 70250**
  **F-35802 Dinard Cedex (FR)**

(54) **Method and device for non acknowledging a packet**

(57)    The present invention concerns a method and device for transferring a signal by a first telecommunication device to a second telecommunication device. The first telecommunication device transfers to the second telecommunication device an instruction (S600) to transfer a packet to the first telecommunication device, checks if the packet is received (S601) from the second telecommunication device, decodes the packet if the packet is received (S602) and transfers the same signal to the second telecommunication device (S605,S604) if the packet is not received or if the packet is not decoded successfully.

Fig. 6

EP 1 887 737 A1

## Description

The present invention relates generally to telecommunication systems and in particular, to a method and a device for transferring a non acknowledgment signal by a first telecommunication device to a second telecommunication device.

In classical telecommunication networks like wireless networks, acknowledgement signal (ACK) and non acknowledgement signal (NACK) are transferred when a telecommunication device decodes successfully or can not decode successfully a packet transferred by another telecommunication device.

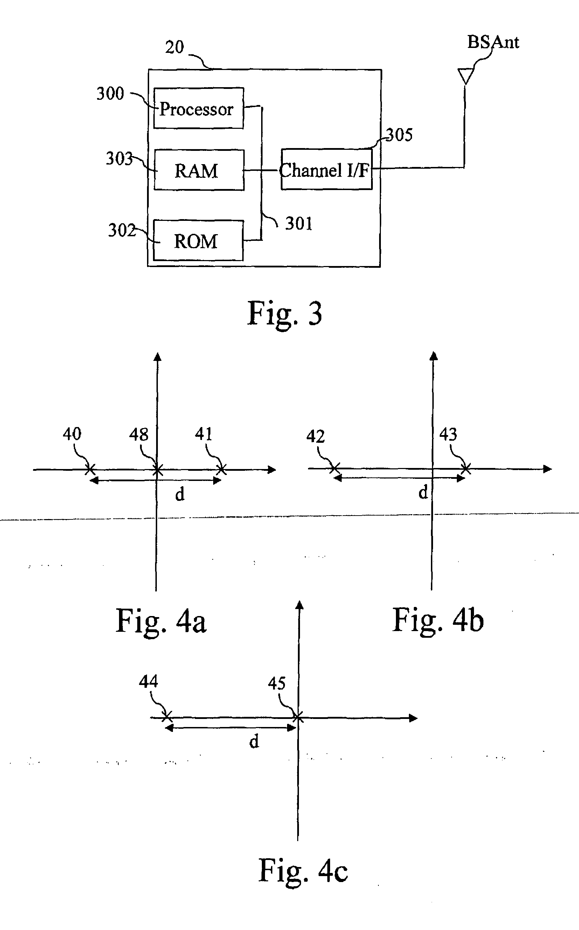

The **Fig. 4a** is an example of a constellation of ACK/NACK signals used in the prior art.

In classical wireless telecommunication systems, when a telecommunication device receives a packet, it transfers a signal using Binary Phase Shift Keying signal in order to inform the telecommunication device which transferred the packet if the packet has been successfully decoded or not.

When the packet is successfully decoded, the telecommunication device transfers an ACK signal noted 41 in the Fig. 4a.

When the packet is not successfully decoded, the telecommunication device transfers a NACK signal noted 40 in the Fig. 4a.

When no packets are received or if the header of the packet is corrupted and can not be decoded, no signal is transferred. The absence of the transferred signal is noted 48 in the Fig. 4a.

In conventional methods, BPSK signal is used to transfer an ACK or a NACK signal. For instance, ACK/NACK signal $s(p)$ has an amplitude of $s(p) = \left\{ \begin{array}{c} 1 \\ -1 \end{array} \right\}$.

The average transmit power for the ACK/NACK signals $W$ is equal to:

$$ W = E \left[ \left| s(p) \right|^2 \right] = 1 . $$

Then, second telecommunication device which receives the ACK/NACK signals, receives a signal $x(p) = s(p) + n(p)$, where $n(p)$ is a random variable with a standard deviation of $\sigma$ .

The error probability on ACK/NACK signals depends on $\sigma$ and the distance $d$ between ACK and NACK. $d$ is generally equal to two.

In that acknowledgment, non acknowledgement technique several problems occurs.

If the amplitude of the received ACK or NACK signal is small, the ACK or NACK signal may be considered as non received signal. In order to solve that problem, one could, increase the transmission power of the ACK or NACK signal but it will directly increase the power consumption of the telecommunication device which transfers this signals

Furthermore, by setting the same amplitude for the ACK or NACK signal the average transmit power for the ACK/NACK signals $W$ is relatively high and increases the power consumption of the telecommunication device which transfers these signals.

The aim of the invention is therefore to propose methods and devices which allow an improvement of the above mentioned technique and which enable a reduction of the power consumption of the telecommunication device which transfers the acknowledgment non acknowledgment signals.

To that end, the present invention concerns a method for transferring a signal by a first telecommunication device to a second telecommunication device, characterised in that the method comprises the steps executed by the first telecommunication device af :

- transferring to the second telecommunication device an instruction to transfer a packet to the first telecommunication device,
- checking if the packet is received from the second telecommunication device,
- if the packet is received, decoding the packet,
- transferring the same signal to the second telecommunication device if the packet is not received or if the packet is not decoded successfully.

The present invention concerns also a device for transferring a signal by a first telecommunication device to a second telecommunication device, characterised in that the device for transferring is included in the first telecommunication device and comprises :

- means for transferring to the second telecommunication device an instruction to transfer a packet to the first telecommunication device,
- means for checking if the packet is received from the second telecommunication device,
- means for decoding the packet if the packet is received,
- means for transferring the same signal to the second telecommunication device if the packet is not received or if the packet is not decoded successfully.

Thus, as far as the same signal is transferred if the packet is not received or if the packet is not decoded successfully, the process executed by the first telecommunication device is simplified.

The first telecommunication device sends that signal even if the first telecommunication device doesn't receive the packet. In contrast, the previous methods don't send any signal if no packet is received.

According to a particular feature, the first telecommunication device transfers another signal to the second telecommunication device if the packet is decoded successfully.

Thus, as far as the same signal is transferred either the packet is not received or the packet is not decoded successfully, the possibility that the other signal is considered as non received signals by the second telecommunication device is reduced.

According to a particular feature, the amplitude of the other signal is lower than the amplitude of the signal.

Thus, the present invention enables a reduction of the power consumption of the telecommunication device which transfers the signals.

According to a particular feature, the amplitude of the other signal is equal to zero.

Thus, the power consumption of the telecommunication device which transfers the signals is reduced.

Furthermore, as the first telecommunication device sends that signal even if the first telecommunication device doesn't receive the packet, the other signal can have an amplitude which is equal to zero.

According to a particular Mature, the difference between the amplitudes of the signal and the other signal is equal to two.

Thus, since the amplitude distance between the signal and the other signal is equal to two, the error probability on ACK/NACK signals is identical to the one of the above mentioned prior art.

According to still another aspect, the present invention concerns a method for processing a signal received from a first telecommunication device by a second telecommunication device characterised in that the method comprises the steps executed by the second telecommunication device of :

- checking if an instruction to transfer a packet to the first telecommunication device has being received prior to the reception of the signal,
- processing the received signal only if an instruction to transfer a packet to the first telecommunication device has being received prior to the reception of the signal.

The present invention concerns also a device for processing a signal received from a first telecommunication device by a second telecommunication device characterised in that the device for processing is included in the second telecommunication device and comprises :

- means for checking if an instruction to transfer a packet to the first telecommunication device has being received prior to the reception of the signal,
- means for processing the received signal only if an instruction to transfer a packet to the first telecommunication device has being received prior to the reception of the signal.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and devices according to the invention, they will not be repeated here.

According to still another aspect, the present invention concerns a signal transferred by a first telecommunication device to a second telecommunication device consecutively to an instruction transferred by the first telecommunication device to the second telecommunication device to transfer a packet from the second telecommunication device to the first telecommunication device, characterised in that the signal is representative either of the non reception of the packet or the packet is not decoded successfully.

Since the features and advantages relating to the signal are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the wireless network according to the present invention;
Fig. 2 is a diagram representing the architecture of a first telecommunication device according to the present invention;
Fig. 3 is a diagram representing the architecture of a second telecommunication device according to the present invention;
Fig. 4a is an example of a constellation of ACK/NACK signals used in the prior art;
Fig. 4b is a first example of a constellation of ACK/ NACK signals used in the present invention;
Fig. 4c is a second example of a constellation of ACK/ NACK signals used in the present invention;
Fig. 5a is a diagram representing downlink and uplink time frames in a wireless telecommunication system which uses Time Division Duplexing scheme;
Fig. 5b is a diagram representing downlink and uplink time frames in a wireless telecommunication system which uses Frequency Division Duplexing scheme;
Fig. 6 is an algorithm executed by the first telecommunication device according to the present invention;
Fig. 7 is an algorithm executed by the second telecommunication device according to the present invention;

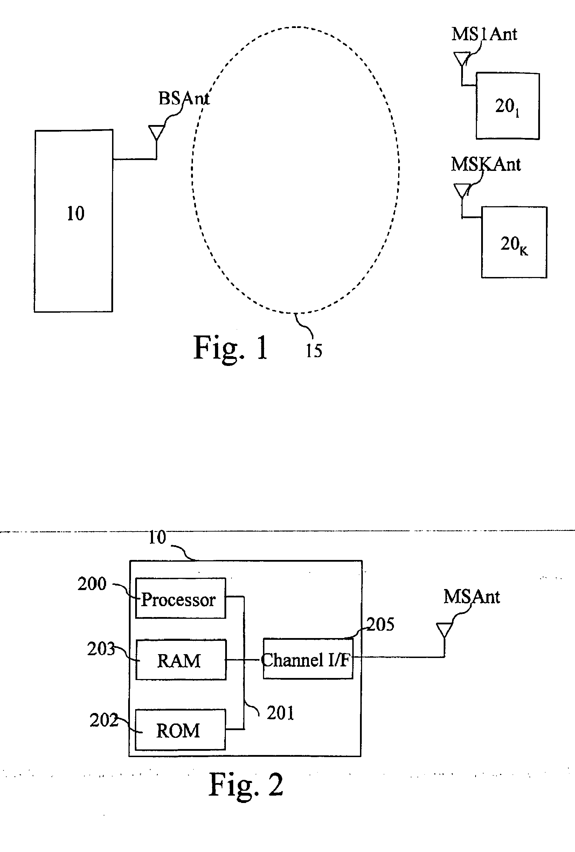

**Fig. 1** is a diagram representing the architecture of the wireless network according to present invention.

In the wireless network of the Fig. 1, at least one and preferably plural second telecommunication devices $20_I$ or $20_K$ are linked through a wireless network 15 to a first telecommunication device 10 using an uplink and a downlink channel.

Preferably, and in a non limitative way, the first telecommunication device 10 is a base station or a node or an enhanced node of the wireless network 15.

The second telecommunication devices $20_1$ to $20_K$ are terminals like mobile phones, personal digital assistants, or personal computers.

The telecommunication network 15 is a wireless telecommunication system which uses Time Division Duplexing scheme (TDD) or Frequency Division Duplexing scheme (FDD).

In TDD scheme, the signals transferred in uplink and downlink channels are duplexed in different time frames in the same frequency band. The signals transferred within the wireless network 15 share the same frequency spectrum.

In FDD scheme, the signals transferred in uplink and downlink channels are duplexed in different frequency bands.

When the first telecommunication device 10 transfers signals to a second telecommunication device 20, the data are transferred through a downlink time frame of the downlink channel.

When a second telecommunication device 20 transfers signals or packets to the first telecommunication device 10, the data are transferred through an uplink time frame of the uplink channel.

According to the invention, the first telecommunication device 10 instructs, in a downlink time frame, the second telecommunication device 20 which has to transfer at least one packet in the next uplink time frame of the uplink channel.

According to the invention, the first telecommunication device transfers in the next downlink time frame the same signal if it does not receive a packet from the second telecommunication device 20 it has instructed in the previous downlink time frame to transfer a packet or if the header or the payload of the packet from the second telecommunication device 20 which has been instructed in the previous downlink time frame to transfer a packet can not be decoded successfully. That signal is named a non acknowledgment or NACK signal.

Preferably and in a non limitative way, the first telecommunication device 10 transfers in the next downlink time frame another signal if it decodes properly the packet received from the second telecommunication device 20 which has been instructed to transfer a packet in the previous downlink time frame. That signal is named an acknowledgment or ACK signal.

The first telecommunication device 10 comprises at least one antenna noted BSAnt and each second telecommunication device comprises $20_I$ to $20_K$ at least one antenna noted respectively MS IAnt to MSKAnt.

**Fig. 2** is a diagram representing the architecture of a first telecommunication device according to the present invention.

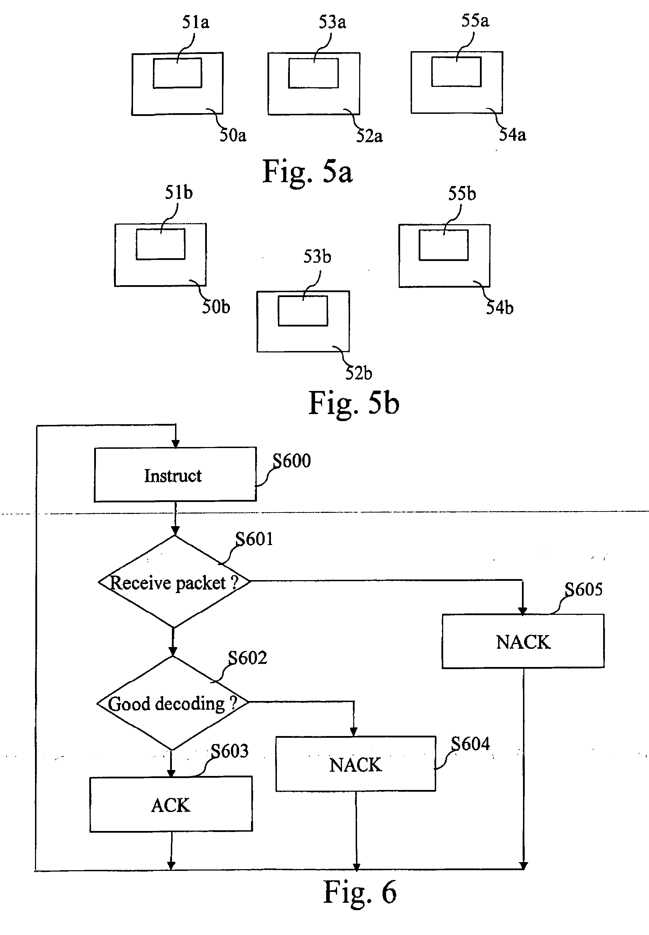

The first telecommunication device 10 has, for example, an architecture based on components connected together by a bus 201 and a processor 200 controlled by the program related to the algorithm as disclosed in the Fig. 6.

It has to be noted here that the first telecommunication device 10 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithm as disclosed in the Fig. 6 which are transferred, when the first telecommunication device 10 is powered on to the random access memory RAM 203.

The RAM memory 203 contains registers intended to receive variables, and the instructions of the programs related to the algorithm as disclosed in the Fig. 6.

The channel interface 205 enables the transfer of signals to the second telecommunication devices 20. Through the channel interface 205, the processor 200 indicates in a downlink time frame, which second telecommunication device 20 has to transfer a packet in the next uplink time frame.

The channel interface 205 comprises means for detecting the reception of a packet in an uplink time frame and means for decoding the received packet. If the decoding of the header of the received packet is not successful, the channel interface 205 considers it has a non received packet. If the decoding of the payload of the received packet is not successful, the channel interface 205 informs the processor 200 that it has received a corrupted packet.

Through the channel interface 205, the processor 200 commands the transfer in the next downlink time frame of an ACK signal if the received packet is successfully decoded or commands the transfer in the next downlink time frame of a NACK signal if the first telecommunication device 10 does not receive a packet from the second telecommunication device 20 it has instructed to transfer a packet in the previous downlink time frame or if the first telecommunication device 10 can not decode properly the header or the payload of the received packet.

**Fig. 3** is a diagram representing the architecture of a second telecommunication device according to the present invention.

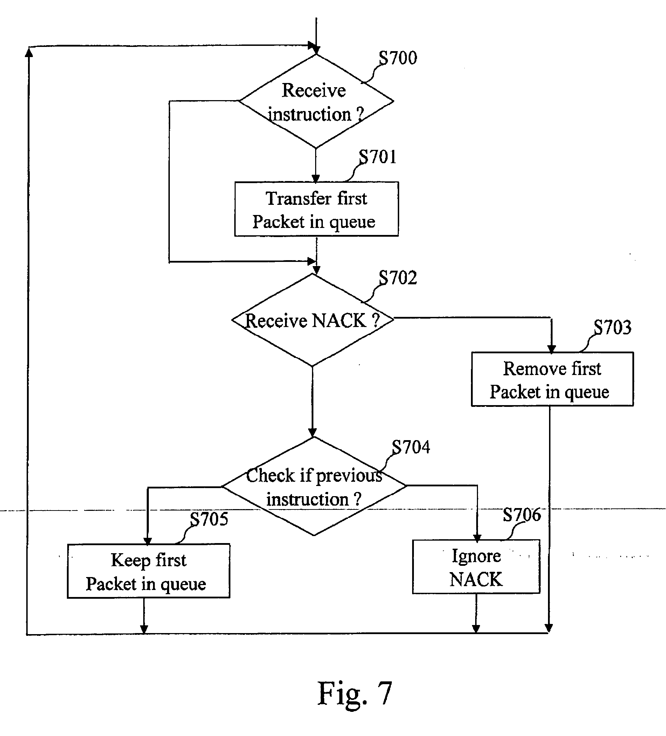

The second telecommunication device 20, as example the second telecommunication device $20_k$ ,with k comprised between 1 and K, has, for example, an architecture based on components connected together by a bus 301 and a processor 300 controlled by programs related to the algorithm as disclosed in the Fig. 7.

It has to be noted here that the second telecommunication device 20 is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303 and a channel interface 305.

The read only memory ROM 302 contains instructions of the program related to the algorithm as disclosed in the Fig. 7 which are transferred, when the first telecommunication device $20_k$ is powered on to the random access memory RAM 303.

The RAM memory 303 contains registers intended to receive variables, and the instructions of the program related to the algorithm as disclosed in the Fig. 7.

The channel interface 305 enables the transfer of packets to the first telecommunication device 10.

The channel interface 305 comprises means for detecting in the downlink time frames indication authorizing the second telecommunication device 20 to transfer packet in the next uplink time frame, means for detecting in the downlink time frames NACK signals and ACK signals and means for transferring the ACK/NACK to the processor 300.

Figs. **4b** and **4c** are examples of a constellation of ACK/NACK signals used in the present invention.

According to the present invention, ACK or NACK signal **s(p)** has an amplitude of:

$$s(p) = \begin{Bmatrix} 1 - \alpha \\ -1 - \alpha \end{Bmatrix},$$

where $\alpha > 0$.

Since the amplitude distance between ACK and NACK signals is equal to **1 - $\alpha$ - (-1- $\alpha$) = 2**, the error probability on ACK/NACK signals is identical to the one of the above mentioned prior art.

Assuming an error rate on the data packets $P_e$, the average transmit power **W** for ACK and NACK signals is expressed as :

$$W = (1 - P_e)(1 - \alpha)^2 + P_e(-1 - \alpha)^2$$

$$W = 1 + 2(2P_e - 1)\alpha + \alpha^2.$$

Usually, in wireless telecommunication systems, the packet error rate $P_e$ is controlled to be less than 0.5, which can be achieved by selecting appropriate modulation and coding scheme according to the channel conditions.

Thus, ACK are sent more frequently than NACK. The probability to send an ACK signal is equal to **1 - $P_e$** and is upper than 0.5. The probability to send a NACK signal is equal to $P_e$ and is lower than 0.5.

By selecting $\alpha$ such that $0 < \alpha < 2 - 4P_e$, **W** satisfies :

$$W = 1 + \alpha(4P_e - 2 + \alpha) < 1.$$

Therefore, the ACK/NACK signals transmission requires less transmission power than the existing prior art and still maintains the same error probability of ACK/NACK than the prior art.

According to the first example of the Fig. 4b, the first telecommunication device 10 instructs in a downlink time frame the second telecommunication device 20 which has to transfer packet in the next time period of the uplink channel.

The first telecommunication device 10 transfers in the next downlink time frame the same signal if the first telecommunication device 10 does not receive a packet from the second telecommunication device 20 it has instructed in the previous downlink time frame to transfer a packet or if the first telecommunication device 10 can not decode successfully the header or the payload of the received packet from the second telecommunication device 20 it has instructed in the previous downlink time frame to transfer a packet. That signal is a NACK signal noted 42 in the Fig. 4b.

Preferably and in a non limitative way, the first telecommunication device 10 transfers in the next downlink time frame another signal if it decodes properly the packet received from the second telecommunication device 20. That signal is an ACK signal noted 43 in the Fig. 4b.

In the example of the Fig. 4b, $0 < \alpha < 1$.

According to the second example of the Fig. 4c, the first telecommunication device 10 instructs in a downlink time frame the second telecommunication device 20 which has to transfer packet in the next time period of the uplink channel.

The first telecommunication device 10 transfers in the next downlink time frame the same signal if it does not receive a packet from the second telecommunication device 20 it has instructed in the previous downlink time frame to transfer a packet or if the first telecommunication device 10 can not decode properly the header or the payload of the packet received from the second telecommunication device 20 it has instructed to transfer a packet in the previous downlink time frame. That signal is a NACK signal noted 44 in the Fig. 4c.

Preferably and in a non limitative way, the first telecommunication device 10 transfers in the next downlink time frame another signal if it decodes properly the packet received from the second telecommunication device 20 it has instructed to transfer a packet in the previous downlink time frame. That signal is an ACK signal noted 45 in the Fig. 4c.

In the example of the Fig. 4c, $\alpha = 1$, i.e. the ACK signal 45 is equal to null value.

**Fig. 5a** is a diagram representing downlink and uplink time frames in a wireless telecommunication system which uses Time Division Duplexing scheme.

In the Fig. 5a, only three time frames are shown for the sake of simplicity. The time frames noted 50a and 54a are downlink time frames, the time frame 52a is an uplink time frame.

In the downlink time frame 50a, the first telecommunication device 10 transfers an instruction 51a to a second telecommunication device 20, as example the second telecommunication device $20_I$, authorizing the second telecommunication device $20_I$ to transfer a packet in a time period 53a of the next uplink time frame 52a of the uplink channel.

In the uplink time frame 52a, the second telecommunication device $20_1$ transfers a packet to the first telecommunication device 10 in the time period 53a of the uplink time frame 52a.

In the downlink time frame 54a, the first telecommunication device 10 transfers a signal in a predetermined time period 55a of the downlink time frame 54a.

The signal is a NACK signal if the first telecommunication device 10 does not receive a packet from the second telecommunication device $20_1$ it has instructed to transfer a packet in the previous downlink time frame 50a or if the first telecommunication device 10 can not decode successfully the header or the payload of the packet received from the second telecommunication device $20_1$.

According to the example of the Fig. 4b, the signal is an ACK signal if the first telecommunication device 10 decodes successfully the packet received from the second telecommunication device $20_1$ it has instructed in the previous downlink time frame 50a to transfer a packet.

According to the example of the Fig. 4c, the signal is an ACK signal with an amplitude equal to zero.

**Fig. 5b** is a diagram representing downlink and uplink time frames in a wireless telecommunication system which uses Frequency Division Duplexing scheme. In the Fig. 5b, only three time frames are shown for the sake of simplicity. The time frames noted 50b and 54b are downlink time frames; the time frame 52b is an uplink time frame.

The downlink time frames 50b and 54b are not put on the same horizontal lines in the Fig. 5b than the uplink time frame 52b in order to show that they belong to different frequency bands.

In the downlink time frame 50b, the first telecommunication device 10 transfers an instruction 51 b to a second telecommunication device 20, as example the second telecommunication device $20_1$, authorizing the second telecommunication device $20_1$ to transfer a, packet in a time period 53b of the next uplink time frame 52b of the uplink channel.

In the uplink time frame 52b, the second telecommunication device $20_1$ transfers a packet to the first telecommunication device 10 in the time period 53b of the uplink time frame 52b.

In the downlink time frame 54b, the first telecommunication device 10 transfers a signal in a predetermined time period 55b of the downlink time frame 54b.

The signal is a NACK signal if the first telecommunication device 10 does not receive a packet from the second telecommunication device $20_I$ it has instructed to transfer a packet in the previous downlink time frame 50b or if the first telecommunication device 10 can not decode successfully the header or the payload of the packet received from the second telecommunication device $20_I$.

According to the example of the Fig. 4b, the signal is an ACK signal if the first telecommunication device 10 decodes successfully the packet received from the second telecommunication device $20_1$ it has instructed in the previous downlink time frame 50b to transfer a packet.

According to the example of the Fig. 4c, the signal is an ACK signal with an amplitude equal to zero.

**Fig. 6** is an algorithm executed by the first telecommunication device according to the present invention.

The processor 200 of the first telecommunication device 10 executes the present algorithm for each downlink time frame.

At step S600, the processor 200 commands the transfer, through the channel interface 205, of an instruction which indicates in the downlink time frame 50, which second telecommunication device 20 has to transfer a packet in the next uplink time frame 52.

At next step S601, the processor 200 checks whether or not a packet is received by the channel interface 205 in response to the instruction transferred at step S600.

If a packet is received, the processor 200 moves to step S602. If a packet is not received, the processor 200 moves to step S605.

It has to be noted here that a packet is considered as not being received if a packet is effectively not received or if the header of the received packet is not successfully decoded.

At step S605, the processor 200 commands the transfer of a NACK signal in the downlink time frame 54 through the channel interface 205. After that, the processor 200 returns to step S600.

At step S602, the processor 200 checks whether or not if the payload of the received packet is successfully decoded by the channel interface 205.

If the payload of the packet is successfully decoded, the processor 200 moves to step S603. If the decoding of the payload of the packet is not successful, the processor 200 moves to step S604.

At step S603, the processor 200 commands the channel interface 205 to transfer in the next downlink time frame 54 of an ACK signal. After that, the processor 200 returns to step S600.

At step S604, the processor 200 commands the channel interface 205 to transfer in the next downlink time frame 54 of a NACK signal. After that, the processor 200 returns to step S600.

**Fig. 7** is an algorithm executed by the second telecommunication device according to the present invention.

The present algorithm is executed by each second telecommunication device 20 and for each downlink time frame. The present algorithm will be disclosed when it is executed by the processor 300 of the second telecommunication device $20_1$.

At step S700, the processor 300 checks whether or not an instruction which indicates, in the downlink time frame 50, that the second telecommunication device $20_1$ has to transfer a packet in the next uplink time frame 52.

If the downlink time frame 50 does not comprise such instruction, the processor 300 moves to step S702. If the downlink time frame 50 comprises such instruction, the processor 300 moves to step S701.

At step S701, the processor 300 commands the transfer of a packet through the channel interface 305 in the uplink time frame 52. The processor 300 moves then to step S702. The transferred packet is the first packet comprised in a queue stored in the RAM memory 303.

At step S702, the processor 300 checks, through the channel interface 305, whether or not a NACK signal is received in the downlink time frame 54.

If a NACK signal is received, the processor 300 moves to step S704. If no NACK signal is received, the processor 300 moves to step S703.

It has to be noted here that instead of checking if a NACK signal is received, the processor 300 may check if an ACK signal is received. According to the example of the Fig. 4c, an ACK signal corresponds to a signal equal to null. According to the example of the Fig. 4b, an ACK signal corresponds to a signal which has an amplitude which is lower than the one of a NACK signal.

At step S703, the processor 300 removes the first packet comprised in the queue stored in the RAM memory 303. After that, the processor 300 returns to step S700.

At step S704, the processor 300 checks whether or not an instruction which indicates, in the downlink time frame 50, that the second telecommunication device $20_1$ had to transfer a packet in the uplink time frame 52 has been received at step S700.

If no instruction has been received at step S700, the processor 300 moves to step S706. If an instruction has been received at step S700, the processor 300 moves to step S705.

At step S706, the processor 300 ignores the NACK signal and returns to step S700.

At step S705, the processor 300 maintains the packet transferred at step S701 in the queue stored in the RAM memory 303. After that, the processor 300 returns to step S700.

Naturally, many modifications can be made to the embodiments of the invention described above without departing from the scope of the present invention.

**Claims**

1. Method for transferring a signal by a first telecommunication device to a second telecommunication device, **characterised in that** the method comprises the steps executed by the first telecommunication device of :

    - transferring to the second telecommunication device an instruction to transfer a packet to the first telecommunication device,
    - checking if the packet is received from the second telecommunication device,
    - if the packet is received, decoding the packet,
    - transferring the same signal to the second telecommunication device if the packet is not received or if the packet is not decoded successfully.

2. Method according to claim 1, **characterised in that** the method comprises further step of:

    - transferring another signal to the second telecommunication device if the packet is decoded successfully.

3. Method according to claim 2, **characterised in that** the amplitude of the other signal is lower than the amplitude of the signal.

4. Method according to claim 3, **characterised in that** the amplitude of the other signal is equal to zero.

5. Method according to any of the claims 2 to 4, **characterised in that** the difference between the amplitudes of the signal and the other signal is equal to two.

6. Method for processing a signal received from a first telecommunication device by a second telecommunication device **characterised in that** the method comprises the steps executed by the second telecommunication device of :

    - checking if an instruction to transfer a packet to the first telecommunication device has being received prior to the reception of the signal,
    - processing the received signal only if an instruction to transfer a packet to the first telecommunication device has being received prior to the reception of the signal.

7. Device for transferring a signal by a first telecommunication device to a second telecommunication device, **characterised in that** the device for transferring is included in the first telecommunication device and comprises

   - means for transferring to the second telecommunication device an instruction to transfer a packet to the first telecommunication device,
   - means for checking if the packet is received from the second telecommunication device,
   - means for decoding the packet if the packet is received,
   - means for transferring the same signal to the second telecommunication device if the packet is not received or if the packet is not decoded successfully.

8. Device for processing a signal received from a first telecommunication device by a second telecommunication device **characterised in that** the device for processing is included in the second telecommunication device and comprises :

   - means for checking if an instruction to transfer a packet to the first telecommunication device has being received prior to the reception of the signal,
   - means for processing the received signal only if an instruction to transfer a packet to the first telecommunication device has being received prior to the reception of the signal.

9. Signal transferred by a first telecommunication device to a second telecommunication device consecutively to an instruction transferred by the first telecommunication device to the second telecommunication device to transfer a packet from the second telecommunication device to the first telecommunication device, **characterised in that** the signal is representative either of the non reception of the packet or the packet is not decoded successfully.

10. Computer program which can be directly loadable into a programmable device, comprising instructions or portions of code for implementing the steps of the method according to claims 1 to 5, when said computer program is executed on a programmable device.

11. Computer program which can be directly loadable into a programmable device, comprising instructions or portions of code for implementing the steps of the method according to claim 6, when said computer program is executed on a programmable device.

**Fig. 1**

15

**Fig. 2**

**Fig. 3**

**Fig. 4a**

**Fig. 4b**

**Fig. 4c**

Fig. 5a

Fig. 5b

Fig. 6

Fig. 7

**European Patent Office**

## EUROPEAN SEARCH REPORT

Application Number

EP 06 01 6749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/133273 A1 (JULIAN DAVID J [US] ET AL) 22 June 2006 (2006-06-22) | 1,2,6-11 | INV. H04L12/56 H04L1/16 |
| A | * abstract * <br> * page 1, paragraphs 2,7,8 * <br> * page 1, paragraph 9 - page 2, paragraph 12 * <br> * page 2, paragraph 28 - page 3, paragraph 31 * <br> * page 3, paragraph 34 * <br> * page 4, paragraph 47 - page 5, paragraph 48 * <br> * page 5, paragraph 52 * <br> * claims 1,14,18,31,35,37,39,44 * <br> * figures 2,7,8 * | 3-5 | |
| A | US 2005/068908 A1 (QIAN FENG [US] ET AL) 31 March 2005 (2005-03-31) <br> * abstract * <br> * page 1, paragraphs 2,3 * <br> * page 1, paragraph 7-9 * <br> * page 1, paragraph 10 - page 2, paragraph 14 * <br> * page 3, paragraph 29 * <br> * page 4, paragraph 34-36 * <br> * page 7, paragraph 67 - page 8, paragraph 71 * <br> * page 9, paragraph 86 - page 10, paragraph 88 * <br> * claims 1,11,14,22,29,31 * <br> * figures 1-4 * | 1-11 | |

-----

-----

-/--

**TECHNICAL FIELDS SEARCHED (IPC)**

H04L

The present search report has been drawn up for all claims

| Place of search | Date of completion of the search | Examiner |
|---|---|---|
| Munich | 9 February 2007 | Schrembs, Gerd |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

**EUROPEAN SEARCH REPORT**

Application Number

EP 06 01 6749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/264551 A1 (EIDSON DONALD BRIAN [US]) 30 December 2004 (2004-12-30) * abstract * * page 1, paragraph 1 - paragraph 4 * * page 1, paragraph 7 - paragraph 11 * * page 2, paragraph 37 - page 3, paragraph 43 * * claims 1,8,15,16 * * figures 3A-4D *  ----- | 1-11 | |

TECHNICAL FIELDS
SEARCHED        (IPC)

The present search report has been drawn up for all claims

| Place of search | Date of completion of the search | Examiner |
|---|---|---|
| Munich | 9 February 2007 | Schrembs, Gerd |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 01 6749

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2007

| Patent document cited in search report | | Publication date | Patent family member(s) | | Publication date |
|---|---|---|---|---|---|
| US 2006133273 | A1 | 22-06-2006 | WO | 2006069269 A1 | 29-06-2006 |
| US 2005068908 | A1 | 31-03-2005 | NONE | | |
| US 2004264551 | A1 | 30-12-2004 | WO | 2005006693 A1 | 20-01-2005 |

EPO FORM P0459

For more details about this annex : see Official Journal of the European Patent Office, No. 12/82